Europäisches Patentamt

European Patent Office

Office européen des brevets

(19)

(11) Publication number: **0 341 230**
**A2**

(12) # EUROPEAN PATENT APPLICATION

(21) Application number: **89850138.2**

(22) Date of filing: **27.04.89**

(51) Int. Cl.4: **G 06 F 3/06**

(30) Priority: **05.05.88 US 190422**

(43) Date of publication of application:
**08.11.89 Bulletin 89/45**

(84) Designated Contracting States: **DE FR GB**

(71) Applicant: **International Business Machines
Corporation
Old Orchard Road
Armonk, N.Y. 10504 (US)**

(72) Inventor: **Clark, Connie Mae
2391 W. Rapallo Way
Tucson Arizona 85741 (US)**

**Harding, Warren Bruce
11340 E. Comanchero Circle
Tucson Arizona 85749 (US)**

**Gallo, Cindy Lou
11402 E. Summer Trail
Tucson Arizona 85749 (US)**

**Tang, Horace Tin Sze
4509 N. Via Entrada No. 144
Tucson Arizona 85718 (US)**

(74) Representative: **Ekström, Gösta E.
IBM Svenska AB Intellectual Property Department
S-163 92 Stockholm (SE)**

(54) **Data storage hierarchy and method for managing data therein.**

(57) A method for managing data in a data storage hierarchy, and a data storage hierarchy for implementing such method is disclosed. The data storage hierarchy includes a data catalog (60) and a plurality of data storage levels (10, 20, 40, 30). The data catalog stores information indicating data management rules for the data stored in the hierarchy. Data stored in the hierarchy are flagged upon being referenced by the host processor (50). The flagged data is managed according to the management rules during periods of low hierarchy activity. After the flagged data are managed, the flags are reset. The method, and hierarchy employing such, avoid problems associated with managing large quantities of data.

## Description

## DATA STORAGE HIERARCHY AND METHOD FOR MANAGING DATA THEREIN

This invention relates to a method for managing data in a data storage hierarchy, and a data storage hierarchy employing such method. More particularly, the method relates to the managing of data in the data storage hierarchy as the data is referenced.

It is highly desirable to store computer data in such a manner that it be immediately available when required. Fast access to data can be achieved by using a very large high speed data storage device. However, the price of data storage increases as both the speed and capacity of the data storage device increases. Therefore, high speed memories are typically of a relatively small capacity, which is often exceeded by the amount of data required to be stored for a given application. When the given application requires data storage exceeding that of high speed memory, it becomes impractical to rely on a single low speed, high capacity data storage device because access time to the data becomes prohibitively large.

The access time to data may be improved by employing a data storage hierarchy in place of a single data storage device. A data storage hierarchy consists of multiple levels of data storage devices. The highest level, or first level, is typically the smallest, fastest, and most expensive form of data storage. The size of data storage increases and the speed and cost of data storage typically decreases as the level of storage in the hierarchy also decreases. Examples of data storage devices employed in hierarchies include: semiconductor device main and cache memory, magnetic tape drives, magnetic drums, magnetic disk drives, and optical disk drives. These devices may be used in a variety of combinations and levels to create a data storage hierarchy. In addition, a level of the data storage hierarchy may be comprised of a magnetic tape, magnetic disk, or optical disk library. A library, or mass storage system, includes one or more data storage devices, a plurality of storage cells, and a mechanism for automatically transferring data storage media between the shelf and the storage devices. For example, an optical disk library could include one or more optical disk drives, a plurality of storage cells for storing optical disks, and mechanized means for transferring the disks between the storage cells and the optical disk drives. The existence of libraries is well known, as evidenced by an article by Dorrell and Mecklenburg. (Mass Storage Device, IBM Technical Disclosure Bulletin, Vol. 15, No. 9, Feb. 1973, pp. 2943-45.)

Typically, a system including a data storage hierarchy is operated such that all data contained therein are initially stored in the highest level of the hierarchy. Over time, according to rules programmed into the hierarchy, data are transferred between different levels of the hierarchy to meet the system storage and access needs. When the host processor requires particular data, the location of the data in the hierarchy is first determined. If the data required is stored in the highest level of the hierarchy, the data is retrieved and used. If the data is not stored in the highest level of the hierarchy, it can be retrieved for use directly from its present location, if possible, or first transferred to the highest level of the hierarchy and then retrieved from that level. The movement of data from a relatively low level of the hierarchy to a relatively high level of the hierarchy is known as "staging". The data is staged so as to permit the system rapid access to the data as required in the future. Since data that has recently been used is often likely to be used again shortly thereafter, the presence of the data in the highest level of the hierarchy increases the overall speed of the system. The ability to directly access the data at a lower level of the hierarchy depends on the system connections and type of data storage devices at each level. The data that is accessed from a lower level of the hierarchy is typically determined to be relatively unlikely to be accessed at a relatively high frequency.

A common problem in data storage hierarchies is the relative size of each level of the hierarchy. The high cost of high speed memory requires that the size of the highest or higher levels of the hierarchy be limited. As a result, although data storage hierarchies nevertheless improve the speed of data access over single data storage devices, the capacity of the highest levels of the hierarchy can be exceeded. Use of the highest levels of the data storage hierarchy can be optimized by prioritizing the storage of data at each level. For example, the system may be designed such that data is rated according to its likelihood of use and the level at which it is generally stored is determined thereby. In addition, data may be transferred from relatively higher levels of the hierarchy to relatively lower levels of the hierarchy, as it becomes accessed less frequently over time. The movement of data from a relatively higher level of the hierarchy to a relatively lower level of the hierarchy is known as "destaging". As with staging, destaging may be prioritized according to the frequency of use of particular data. Data not likely to be accessed frequently can be destaged to a relatively low level of the hierarchy for archival purposes.

Data storage hierarchies can have an associated set of rules for managing the data stored therein. These "management rules" determine a variety of actions within a data storage hierarchy. For example, the management rules may determine the priorities for the staging and destaging of data. The expected lack of access of data may require over time that it be destaged to lower levels of the data storage hierarchy. Also, the significance of data currently stored in a single level of the hierarchy may require that copies be made for archival purposes into one or more of the other levels of the hierarchy. Another example of a management rule might be that requiring certain actions within a level of the data storage hierarchy. After a certain time, the data may simply be deleted. Also, the data may be moved from one storage location to another within a level of the hierarchy to change the accessibility of the data within that level. The data management rules may be a single set of rules applying to all data in the hierarchy, or may be a variety of rules assigned individually or in groups to units of data having a common property or properties. Thus, a small set of management rules will allow for managing a large collection of data with a variety of management requirements.

A data management problem arises in how to apply the management rules. For example, the management rules may require that data stored in a particular level of the hierarchy be destaged after its existence in that level for a prescribed period of time--which has expired. However, if the data storage hierarchy has stored therein a large amount of data requiring such destaging, the inundation of such actions may prevent a user from gaining access to the hierarchy. The data channels and busses of the hierarchy will be so busy as to prevent the host processor from using the data storage hierarchy for its intended purposes. Another data management problem which arises is how to apply the management rules when the management rules for a data storage hierarchy, or at least for some of the data stored therein, are changed. The change in the management rules may be accomplished by so programming the data storage hierarchy, either automatically or manually. By manual change, it is meant that system usage is interrupted by the system operator who then programs the new management rules into the system. Upon a change in the management rules, data in the hierarchy may be stored incorrectly according to those new rules. In the example above, the new management rules may require that data stored in a particular level of the hierarchy be destaged after its existence in that level for a prescribed period of time--which has expired. Such data would then require destaging according to the new management rules. However, if the data storage hierarchy has stored therein a large amount of data requiring such destaging, the inundation of such actions will prevent a user from gaining access to the hierarchy. The data channels and busses of the hierarchy will again be so busy as to prevent the host processor from using the data storage hierarchy for its intended purposes.

A possible solution to the aforementioned problems is a delay in managing the data. Managing the data can be delayed until a period of low hierarchy activity, thereby minimizing the risk of preventing users' reference to data stored therein. The delay, however, can result in several other problems. First, the delay itself defeats the purpose of the management rules by not following them. In addition, the purpose of any change in the management rules is so defeated. For example, if the management rules were changed so as to provide faster access to certain data, the delay in implementing those rules would prevent such faster access during the prescribed delay. Also, the periods of low hierarchy activity may not be long enough to permit completion of the data management according to the management rules, whether the management rules are changed or not. Furthermore, if the data management required is so great as to so prevent, the implementation of new management rules will be further delayed until enough periods of low hierarchy activity have occurred so as to allow full implementation. The extended delay thus results in a prolonged period of time during which the purpose for which new management rules are implemented is defeated.

In view of the foregoing, it is the principle object of this invention to improve methods for managing data in data storage hierarchies, and data storage hierarchies including such methods.

Another object of this invention is a method for managing data in a data storage hierarchy without the aforementioned problems associated with delaying data management, and a data storage hierarchy including such methods.

These and other objects are accomplished by managing the data, as per the management rules, whenever the data is referenced. Whenever data is referenced it is flagged. At a period of low data storage hierarchy activity, the flagged data is managed according to then applicable management rules. Management of the data may or may not involve actions to be taken, according to the management rules. After the data has been managed, the flag requiring such management is reset, thereby preventing the data from continually being managed at each period of low hierarchy activity. By managing the data shortly after each reference thereto, the risk of defeating the purpose for which a management rule was implemented is eliminated. In addition, only a fraction of all data in the hierarchy is managed at each period of low hierarchy activity, thereby minimizing the periods of time required for data management.

The foregoing and other objects, features, and advantages of the invention, which is defined in the attached claims, will be apparent from the following more particular description of the preferred embodiment of the invention, as illustrated in the accompanying drawing.

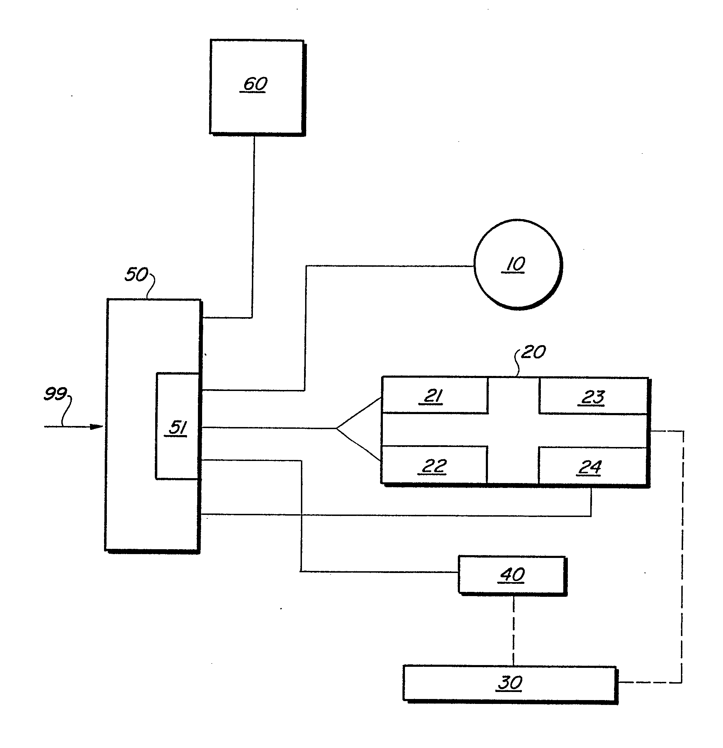

Figure 1 is a schematic diagram of a data storage hierarchy according to the invention.

A data storage hierarchy according to the invention will now be described with reference to Figure 1. The data storage hierarchy includes three levels of data storage. The different levels of data storage are generally associated with different degrees of data storage capacity and different access times. The lower the level of the hierarchy the higher the data storage capacity of that level and typically, the slower the access time to the data stored in that level. The first level of data storage is magnetic direct access storage devices (DASD) 10. The precise number of magnetic disk drives or magnetic disks operable thereon in the hierarchy is not significant with respect to the invention. The second level of data storage in the hierarchy is optical library 20. Optical library 20 includes optical disk drives 21 and 22, storage cells 23 for storing optical disks therein, and control 24 for automatically transferring optical disks between optical disk drives 21 and 22 and storage cells 23. Write-once, read-many (WORM) optical libraries are commercially available, the details and operation of which are known to one of skill in the art. For example, control 24 typically includes an automated robot capable of indexing between different storage cells so as to locate a particular cell and thereby enable said robot to exchange optical disks between storage cells 23 and optical disk drives 21 and 22. The third level of data storage in the hierarchy is represented by optical disk shelf storage 30. Optical disk shelf storage 30 is simply shelf storage arranged in an indexed fashion such that optical disks may be placed in storage or retrieved from storage manually. Thus, a system operator can manually transfer optical disks between optical library 20 and optical disk shelf storage 30. Also, new or "scratch" disks may be inserted into optical library 20 without first being stored in optical disk shelf storage 30. Of further significance is optical disk drive 40 which is a stand alone unit existing separate and apart from optical library 20. The optical disks stored in optical library 20 or optical media shelf storage 30 are compatible with optical disk drive 40. The optical disks are all of such type, for example, WORM optical disks, that reading and writing may be accomplished by optical disk drive 40 or optical disk drives 21 and 22. Optical disk drive 40 is in a sense in the same level of the data storage hierarchy as optical library 20 because a disk mounted on optical disk drive 40 or either of optical disk drives 21 and 22 potentially has the same characteristic access time. However, an optical disk stored in storage cells 23 of optical library 20 can be mounted and accessed more quickly (by automation) than an optical disk existing in optical disk shelf storage 30.

In the present embodiment, the optical disks used in both optical library 20 and optical disk shelf storage 30 are WORM disks. Optical library 20 and optical disk shelf storage 30 are shown connected in Figure 1 by a dotted line to indicate the ability to manually transfer disks therebetween. Likewise, the dotted line between optical disk shelf storage 30 and stand alone optical disk drive 40 represents the ability to manually transfer disks therebetween. Each of the aforementioned items in the data storage hierarchy is connected to host processor 50. The number of host processors or optical disk drives in the various levels of the storage hierarchy are not critical to the present invention. Host processor 50 includes buffer memory 51 used for temporarily storing data as required. Data catalog 60 stores information relevant to the location of data stored in the hierarchy.

The purpose of the data storage hierarchy is to accept data (hereinafter referred to in units known as "objects") at input 99 to host processor 50 and store such objects in a prioritized manner according to the relative age and the likelihood of future access of each object. The objects can exist simultaneously at one or more of buffer memory 51, DASD 10, optical library 20, optical disk shelf storage 30 or optical disk drive 40. The objects are stored on the optical disks in fixed block architecture. The entire side of an optical disk comprises a "volume". Therefore, each optical disk includes two volumes.

Each optical disk volume contains data formatted in a particular manner. Although the exact storage format of each volume is not significant to the invention, the optical disks of the present embodiment store data in a spiral track of sequential sectors. The initial sectors contain data for labeling the individual volume, the next series of sectors contain the volume table of contents (VTOC), and the remaining sectors on the disk store the actual data objects. The VTOC includes a list of the object names and the first sector on the disk storing all or part of each object.

The magnetic disks used in DASD 10 may also be formatted in a manner known to one of skill in the art. Such format includes at least an optical volume stable. The volume table contains a list of the volume labels and certain information associated with each volume, such as whether the volume exists in optical disk library 20 or optical disk shelf storage 30, the date such disk was last mounted on optical disk drives 21 or 22, if located in the library-the exact location in optical disk storage cells 23, and if located in optical disk shelf storage 30 the shelf location.

Data catalog 60 contains an array of information determining where an object is stored in the data storage hierarchy and specifications for determining when such object is to be moved from one hierarchy level to another. Data catalog 60 is organized by object name. Associated with each object name in the list is the following: the date the object was received by host processor 50, a storage class indicating in which levels of the hierarchy the object is located, the volume and sector in optical library 20, if any, in which the object is stored, the volume and sector of optical disk shelf storage 30, if any, in which the object is stored, and a management class. The management class includes information about each object determining whether backup storage, such as in optical disk shelf storage 30, is required in addition to storage in optical library 20 when the data catalog entry for each object is to be deleted, when each data object may be destaged due to its age in the hierarchy from optical library 20 to optical disk storage shelf 30, and when objects stored on DASD 10 are to be destaged or deleted. The storage and management class information is determined upon entrance of an object into the hierarchy, but may be changed at a later time. Data catalog 60 may be physically located in any rewriteable, random-access recording medium, such as DASD 10. However, for the purpose of clarity, data catalog 60 is shown as a distinct logical entity in Figure 1.

Data catalog 60 also contains an entry location for flagging each object listed. A blank entry indicates no flag. The presence of information indicates a flag representing the status of the object. Different flags represent different statuses. For example, "N" indicates an object is newly entered into the hierarchy. "C" indicates the entry in data catalog 60 associated with an object has been changed. "R" indicates an object has been retrieved from storage within the hierarchy. The existence of any flag is an indication that an object has been referenced; a discussion of referencing follows later in this description.

The aforementioned embodiment allows for the movement of an object from one level of the hierarchy to another without losing track of such object. In addition, when an object is received in host processor 50 which is required to be stored in optical library 20, and none of the optical disks then in optical library 20 have the capacity for storage of the object, host processor 50 can command the destaging of an entire optical disk from optical library 20 to optical disk shelf storage 30. An optical disk from outside of the hierarchy, or from optical disk shelf storage 30 can then be placed in optical disk library 20 to store the required object therein. The optical disk least recently mounted on optical disk drives 21 and 22, irrespective of accesses by host processor 50 to a mounted optical disk, is chosen for destaging, as determined by the information in the volume table stored in DASD 10. Destaging is possible to create storage space in optical library 20 for objects newly input into host processor 50, and for objects to be staged or destaged from another level of the data storage hierarchy (for example DASD 10 or optical disk shelf storage 30).

Again with reference to Figure 1, the operation of the data storage hierarchy of the invention will now be described. The following description of operation includes the storage of data, the retrieval of data, and the management of data.

The storage of data within the hierarchy begins with the input of an object 99 at host processor 50. Processor 50 performs any data translation required by the hierarchy and then stores the object in buffer memory 51. At such time, host processor 50 creates an entry in data catalog 60, as designated by the operator or predisposed rules. Based on the information in the data catalog, such as storage class and management class, host processor 50 commands the
placement of the object in the proper location for storage in the hierarchy. In a typical object storage scenario host processor 50 would begin by copying the object from buffer memory 51 into DASD 10, updating any catalogs or tables as necessary, and deleting the object from buffer memory 51. The initial transfer of an object from buffer memory 51 to DASD 10, or any other designated level of the data storage hierarchy, may be batched with other objects so as to minimize the time in which the system is dedicated to data migration. That is, host processor 50 may defer data migration until an off peak load time.

The object now stored in DASD 10 may be rapidly accessed, if necessary by a system user. Host processor 50 will periodically examine data catalog 60 to determine those objects having a management class indicating that migration is necessary. At a prescribed time host processor 50 commands the movement of such objects. In the case of the object which has been stored in DASD 10, it most likely will then need to be moved to either and/or both optical library 20 or optical disk shelf storage 30. It is also possible, however, that the object will simply be designated for deletion from DASD 10 and from data catalog 60. If the object is to be destaged to optical library 20 or optical disk shelf storage 30, host processor 50 determines from the volume table on DASD 10 which volumes have available storage space. Host processor 50 then commands the mounting of the volumes chosen to receive the object upon optical disk drives 21, 22 or 40 and stores the object therein. Simultaneously, host processor 50 updates the storage class in the appropriate entry of data catalog 60 to reflect the new location of the object, and the appropriate entries in the volume table stored on DASD 10 to reflect any updated information required therein. For example, the volume table in DASD 10 needs to be updated to reflect the fact that the volume upon which the object was stored had more recently been mounted than the date then existing in the table. In addition, if the volume was then demounted from an optical disk drive and placed into a different location within storage cells 23 or optical disk storage shelf 30 the volume table would also require updating. Similar procedures are followed for moving objects from optical library 20 to optical disk shelf storage 30 or for deleting objects from the hierarchy altogether. Each time that information is stored on an optical disk the VTOC on the disk would also require updating.

The retrieval of information from storage in the hierarchy begins again with an input by the system to host processor 50. Host processor 50 then examines data catalog 60 to determine where the particular object requested is located. Host processor 50, having determined where such object is located, goes to the respective level of the data storage hierarchy and retrieves the object. Upon copying the object into buffer memory 51, host processor 50 then also updates the appropriate entries in the volume table on DASD 10 or data catalog 60, and sets the object flag in data catalog 60 to "R" to indicate the retrieval. For example, if the object were retrieved from a volume in optical library 20 and the volume required mounting for retrieval of the object, then the volume table requires update of the date last mounted. It is also possible that host processor 50, having determined that the object is likely to be accessed frequently in the future, requires the object to be staged to a higher level in the data storage hierarchy. Host processor 50 then stages the object from one level of storage in the hierarchy to another and again updates the VTOC, volume table on DASD 10, and data catalog 60, as necessary. The need for such staging may be quite infrequent, depending upon the type of data to be stored in the hierarchy. For example, in a hierarchy designed to store documents for archival purposes, the likelihood of ever requiring access to any single document may be so slim that staging the data would be of little or no benefit. In addition, the type of storage at each level in the hierarchy may also affect one's likelihood to stage data. For example, a data storage hierarchy having an optical library and an optical disk shelf storage which include WORM disks, staging data from the optical disk shelf storage to the optical library would be impractical because the objects cannot be erased from the WORM disks. Thus, frequent data staging would unnecessarily fill the disks to capacity. In addition, stand alone optical disk drives, once a disk from the optical disk shelf storage has been mounted therein, are of approximately the same access speed as the optical disk drives in the optical library. Thus, the staging of data between certain hierarchy levels may be of little value.

The data stored in the hierarchy must be managed according to the management class, i.e. according to the management rules. As previously stated, a management rule may encompass a variety of rules. In this embodiment, the management rules are the transition rules for determining when data is to be destaged from DASD 10 to optical library 20, destaged from optical library 20 to optical disk shelf storage 30 for archival purposes, deleted from data catalog 60, or staged from optical library 20 or optical disk shelf storage 30 to DASD 10. When the time of destaging is changed or has expired, as a function of the length of time the object has been stored in optical library 20, the information associated with that object must be reviewed to determine if data management with regard to that object is necessary. At the time of such review, any data management necessary is so performed. Instead of so reviewing all objects existing in optical library 20 at one interval, the objects are not reviewed until they are referenced by the host processor.

Data objects stored in optical library 20 are reviewed for data management according to the management rules after a flag has been set in data catalog 60. Flags are set in data catalog 60 when an object has been referenced by host processor 50. By "referenced" it is meant any time the object is written or read, including staging and destaging operations, or entries associated with the object in data catalog 60 are changed. The flag can be N, C, or R, depending upon the type of reference thereto, as previously mentioned. A blank entry in data catalog 60 where a flag would otherwise be entered is an indication that no flag is set. The use of three different flags N, C, and R is not of significance to this invention. A single flag could be used to represent that an object has been referenced, however, the use of a plurality of flags to indicate a different status of the object may be useful in other types of data management not herein disclosed.

The flagged objects are reviewed according to the management rules at the next period of low data storage hierarchy activity after flagging. According to the present embodiment, the objects are reviewed every 24 hours during the period of lowest hierarchy activity, such as the late evening hours. The exact time or cycle for reviewing the flagged objects is not significant to the invention. For example, if the hierarchy is used on a 5 day work week basis, the flagged objects can be reviewed for data management only after each work day.

Review of a flagged object involves scanning the information stored in data catalog 60 associated with that object. If the storage of the object within the hierarchy is in compliance with the management rules, no action is taken except to reset the flag. If storage of the object in the hierarchy is not in compliance with the management rules, storage of the object is modified so as to be in compliance therewith and the flag is reset. Any change in the management rules, or change in the compliance of the storage of objects according to the existing management rules, since the object was last flagged will now be accounted for.

In the present embodiment, assume as an example that the age at which a flagged object stored in optical library 20 is to be destaged to optical disk shelf storage 30 is changed from 30 to 60 days. If the object has only been stored in optical library 20 for 15 days, such storage is in compliance with the new management rule and no action is taken. Now assume that the same management rule for the same object is changed so as to require destaging to optical disk shelf storage 30 at an age of 10 days in optical library 20. The storage of the referenced object is not in compliance with the new rule and thus the object will be destaged to optical disk shelf storage 30. The "management" of the object means that it was reviewed to determine the need for action according to the existing management rules, regardless of whether any action actually was required. After the flagged object is managed, the flag in data catalog 60 is reset to a blank entry, thereby preventing further review of that object for data management to comply with the management rules until the object is again referenced.

Noncompliance with the management rules can occur without any changes therein. For example, assume that the age at which a flagged object stored in optical library 20 is to be destaged to optical disk shelf storage 30 is 60 days. If the object is less than 60 days old, the storage is in compliance with the management rule and no action is taken. If the object is at least 60 days old, the storage is not in compliance with the management rules and data management is required, as previously described. The noncompliance arises after 60 days and lasts until the object is next referenced and therefore flagged for data management. Thus, noncompliance with the management rules can occur without the management rules being changed.

By managing objects only after their having been referenced by host processor 50, data management occurs in a timely fashion. Although a flagged object will be referenced at least once prior to data management according to newly implemented management rules, the possibility of numerous such references prior to data management is eliminated. Also, by linking data management to the referencing of an object, needless data management for an object which is never again referenced is avoided. Use of the data storage hierarchy is not tied up by excessive data management because such occurs in small increments over time as needed.

## Claims

1. A data storage hierarchy connected to a host processor (50) comprising:
first and second data storage levels (10, 20, 30) connected to the host processor;
a data catalog (60) connected to the host processor and storing information indicating the data management rules for the data stored in the data storage hierarchy; and

means connected to the host processor for determining that data stored in the data storage hierarchy which has been referenced by the host processor.

2. The data storage hierarchy of claim 1 further comprising means connected to the host processor for managing the referenced data according to said data management rules.

3. The data storage hierarchy of claim 2 further comprising means connected to the host processor for preventing further managing of the referenced data after it has once been managed according to said data management rules.

4. The data storage hierarchy of claim 2 wherein said managing means manages the referenced data during periods of low activity in the data storage hierarchy.

5. A data storage hierarchy connected to a host processor (50) comprising:

first and second data storage levels (10, 20, 30) connected to the host processor;

a data catalog (60) connected to the host processor and storing information indicating the data transition rules for the data stored in the data storage hierarchy; and

means connected to the host processor for flagging, in said data catalog, that data stored in the data storage hierarchy which has been referenced by the host processor.

6. The data storage hierarchy of claim 5 further comprising means connected to the host processor for transferring the flagged data between said first and said second data storage levels of the data storage hierarchy according to said data transition rules.

7. The data storage hierarchy of claim 6 further comprising means connected to the host processor for resetting the flag associated with the flagged data after transferring it between said first and said second data storage levels of the data storage hierarchy according to said data transition rules.

8. The data storage hierarchy of claim 6 wherein said transferring means transfers the flagged data during periods of low activity in the data storage hierarchy.

9. A data storage hierarchy of claim 5 wherein the storage levels comprising:

   a) a magnetic storage device connected to the host processor;

   b) an optical library connected to the host processor;

   c) a shelf for receiving optical recording media from said optical library.

10. The data storage hierarchy of claim 9 wherein said transferring means transfers the flagged data between said magnetic storage device, said optical library, and said shelf according to said data transition rules.

11. The data storage hierarchy of claim 10 wherein said resetting means resets the flag associated with the flagged data after transferring it between said magnetic data storage device, said optical library, and said shelf according to said data transition rules.

12. The data storage hierarchy of claim 10 wherein said transferring means transfers the flagged data during periods of low activity in the data storage hierarchy.

13. A method for managing data in a data storage hierarchy connected to a host processor (50), characterized in that the data storage hierarchy includes a data catalog (60) connected to the host processor and stores information indicating the data management rules for the data stored in the data storage hierarchy, comprising the machine executed steps of:

detecting the referencing of data in the data storage hierarchy by the host processor; and

managing according to the data management rules, that data stored in the data storage hierarchy which has been referenced by the host processor.

14. The method of claim 13 wherein said step of managing the referenced data occurs during periods of low activity in the data storage hierarchy.